# EUROPÄISCHE PATENTANMELDUNG

(11) **EP 4 202 253 A1**
(43) Veröffentlichungstag der Anmeldung: **28.06.2023**
(21) Anmeldenummer: 22205010.6
(22) Anmeldetag: 02.11.2022
(51) Int. Cl.: F16F 1/44, F16F 1/46, F16F 3/087

(54) **SCHWINGUNGSDÄMPFER**

(30) Priorität: 04.11.2021 DE 202021106044 U
(71) Anmelder: Sebert Schwingungstechnik GmbH, 73230 Kirchheim/Teck (DE)
(72) Erfinder: KOPACZ, Laszlo, 52000 Sfantu Gheorghe Jud. Covasna (RO)
(74) Vertreter: Patentanwälte Ruff, Wilhelm, Beier, Dauster & Partner mbB

(57) **Zusammenfassung**

Die Erfindung betrifft einen Schwingungsdämpfer. (100) umfassend: einen Befestigungszapfen (110), der an einem Ende eine Befestigungseinrichtung zur Befestigung des Befestigungszapfens (110) an einem Träger (105), daran anschließend einen Mittelabschnitt (116) und an einem gegenüberliegenden Ende einen Kopfabschnitt (118) aufweist; eine Basisplatte (120) mit einer Durchgangsöffnung (122) und Einrichtungen zur Befestigung der Basisplatte an einem Gegenstand (102); ein Topfelement (130) mit einem Topfboden (132) und einer zylindrischen Topfwand (134), wobei das Topfelement (130) an der Basisplatte (120) befestigt ist, so dass zwischen dem Basiselement (120) und dem Topfboden (132) ein im Wesentlichen zylindrischer Innenraum (135) gebildet ist; eine Dämpferelementanordnung (150), die in dem Innenraum angeordnet ist, umfassend: ein elastisch nachgiebiges erstes Dämpferelement (160), das sich an der Basisplatte (120) abstützt; ein elastisch nachgiebiges zweites Dämpferelement (170), das sich an dem Topfboden (132) abstützt; wobei der Kopfabschnitt (118) des Befestigungszapfens (110) im lastfreien Zustand des Schwingungsdämpfers (100) in einem axialen Mittelbereich des Innenraums zwischen der Basisplatte (120) und dem Topfboden (132) angeordnet und mit wenigstens einem der Dämpferelemente (160, 170) oder einem zwischen den Dämpferelementen angeordneten Zwischenelement (550) in Axialrichtung des Befestigungszapfens formschlüssig verbunden ist.

## Beschreibung

Die Erfindung betrifft einen Schwingungsdämpfer.

Ein Schwingungsdämpfer ist ein System zur Dämpfung von mechanischen Schwingungen. Ein bevorzugtes Anwendungsgebiet von Schwingungsdämpfern der in dieser Anmeldung beschriebenen Art ist die schwingungsdämpfende Befestigung von erschütterungsempfindlichen elektronischen Geräten an Trägern, die beim bestimmungsgemäßen Gebrauch gelegentlich Vibrationen, Erschütterungen und/oder Stößen ausgesetzt sein können.

### AUFGABE UND LÖSUNG

Es ist eine Aufgabe der Erfindung, einen Schwingungsdämpfer bereitzustellen, der bei kompakter und robuster Bauart auch in rauen Umgebungen dauerhaft gute Dämpfungseigenschaften bietet.

Zur Lösung dieser Aufgabe stellt die Erfindung einen Schwingungsdämpfer mit den Merkmalen von Anspruch 1 bereit. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Es wird ein Schwingungsdämpfer bereitgestellt, der zur schwingungsdämpfenden Befestigung eines Gegenstands an einem Träger geeignet ist. Bei dem Gegenstand kann es sich beispielsweise um ein erschütterungsempfindliches elektronisches Gerät handeln, als Träger kann beispielsweise ein Rahmen oder ein Gestell oder ein Tisch dienen. Der Träger kann beispielsweise in einem Fahrzeug montiert sein, so dass der Gegenstand während der Fahrt Erschütterungen ausgesetzt sein kann. Diese sollen das empfindliche Gerät nicht beschädigen.

Der Schwingungsdämpfer umfasst einen Befestigungszapfen, der an einem Ende eine Befestigungseinrichtung zur Befestigung des Befestigungszapfens an dem Träger, daran anschließend einen Mittelabschnitt und an einem gegenüberliegenden Ende einen Kopfabschnitt aufweist. Der Befestigungszapfen kann beispielsweise aus einem metallischen Werkstoff, insbesondere Stahl, gefertigt sein. Der Schwingungsdämpfer weist weiterhin eine Basisplatte mit einer Durchgangsöffnung zum Hindurchführen des Befestigungszapfens sowie Einrichtungen zur Befestigung der Basisplatte an dem Gegenstand auf. Die Basisplatte ist somit dasjenige Element, welches an dem gegen Schwingungen zu schützenden Gegenstand befestigt wird. Die Basisplatte kann beispielsweise einen Randabschnitt haben, der die Durchgangsöffnung umschließt und der Durchgangslöcher zum Hindurchführen von Befestigungsschrauben oder anderen Befestigungsmitteln aufweist.

Der Schwingungsdämpfer umfasst weiterhin ein Topfelement mit einem Topfboden und einer zylindrischen Topfwand, die entfernt vom Topfboden einen Rand aufweist. Das Topfelement kann beispielsweise als einteiliges metallisches Tiefziehteil vorliegen, so dass der Topfboden ein Bodenabschnitt und die Topfwand ein einstückig damit ausgebildeter Wandabschnitt des Topfelements ist. Das Topfelement ist mit seinem Rand an der Basisplatte befestigt, so dass zwischen der Basisplatte und dem Topfboden ein im Wesentlichen zylindrischer Innenraum gebildet ist, der von der Topfwand umschlossen ist. Die Kombination aus Basisplatte und daran angebrachtem Topfelement kann als Gehäuse des Schwingungsdämpfers angesehen werden.

In dem genannten Innenraum des Gehäuses ist eine Dämpferelementanordnung angeordnet. Diese umfasst ein elastisch nachgiebiges erstes Dämpferelement, das sich direkt oder indirekt an der Basisplatte abstützt, sowie ein elastisch nachgiebiges zweites Dämpferelement, das sich direkt oder indirekt an dem Topfboden abstützt.

Der Kopfabschnitt des Befestigungszapfens ist im lastfreien Zustand des Schwingungsdämpfers in einem axialen Mittelbereich des Innenraums zwischen der Basisplatte und dem Topfboden angeordnet und mit wenigstens einem der Dämpferelemente oder einem zwischen den Dämpferelementen angeordneten Zwischenelement in Axialrichtung des Befestigungszapfens formschlüssig verbunden.

Durch die in Axialrichtung des Befestigungszapfens wirkende Formschlussverbindung zwischen dem Kopfabschnitt bzw. Befestigungszapfen und einem Element der Dämpferelementanordnung bleibt die Verbindung zwischen diesen dauerhaft bestehen, auch wenn stoßweise Belastungen oder länger anhaltende Vibrationen einwirken. Wirkt ein Stoß oder Schock auf die Gesamtanordnung so, dass der Befestigungszapfen zunächst axial in den Innenraum in Richtung Topfboden vorgeschoben wird, so wird das dem Topfboden nähere zweite Dämpferelement unter Druckspannung und das dem Basiselement nähere erste Dämpferelement unter Zugspannung gesetzt oder teilweise entlastet, so dass beide eine schwingungsdämpfende Gegenkraft aufbauen. Wirkt ein Stoß oder eine Erschütterung zunächst so, dass sich der Befestigungszapfen aus dem Topfelement herausbewegen möchte, so gerät das dem Topfboden nähere zweite Dämpferelement unter Zugspannung oder wird teilweise entlastet, während das dem Basiselement nähere unter Druckspannung gerät und beide eine schwingungsdämpfende Gegenkraft aufbauen. Dadurch, dass der Kopfabschnitt des Befestigungszapfens im lastfreien Zustand des Schwingungsdämpfers in einem axialen Mittelbereich des Innenraums zwischen der Basisplatte und dem Topfboden angeordnet ist, sind etwa gleich große Auslenkungen bzw. Schwingungswege in beide axialen Richtungen möglich, ohne dass der Kopfabschnitt ein Dämpfungselement zu stark komprimiert bzw. dilatiert oder die Dämpfungsanordnung auf Block geht bzw. blockiert. Der Schwingungsdämpfer ist in Axialrichtung bidirektional wirksam und ist somit für zahlreiche schwingungsverursachende Situationen gleichermaßen gut geeignet, unter anderem weil der Spielraum für Auslenkbewegungen in Axialrichtung in beide Richtungen etwa gleich groß ist.

Eine Anordnung des Kopfabschnitts in einem axialen Mittelbereich des Innenraums bedeutet hier insbesondere, dass der Kopfabschnitt innerhalb des mittleren Drittels zwischen dem Topfboden und der Basisplatte angeordnet ist, wenn der Schwingungsdämpfer lastfrei ist. Es kann auch so sein, dass der Kopfabschnitt innerhalb des mittleren Fünftels zwischen Topfboden und Basisplatte angeordnet ist, also in der Nähe der exakten Mitte. Eine Anordnung exakt in der Mitte kann vorgesehen sein, ist jedoch nicht zwingend erforderlich.

Vorzugsweise weist das erste Dämpferelement einen zum Basiselement offenen gewölbten Abstützabschnitt auf, der sich mit einem umlaufenden Rand direkt oder indirekt an der Basisplatte abstützt. Alternativ oder zusätzlich kann vorgesehen sein, dass das zweites Dämpferelement, einen zum Topfboden offenen, gewölbten Abstützabschnitt aufweist, der sich mit einem umlaufenden Rand direkt oder indirekt an dem Topfboden abstützt.

Die gewölbten Abstützabschnitte können im Wesentlichen rotationssymmetrisch ausgebildet sein, insbesondere nach Form von Kalotten oder Halbkugeln. Ein Dämpferelement kann ausschließlich aus dem gewölbten Abstützabschnitt bestehen, also zum Beispiel als Ganzes kalottenförmig gestaltet sein. Es ist auch möglich, dass ein Dämpferelement zusätzlich zu dem gewölbten Abstützabschnitt weitere, einstückig damit ausgebildete Abschnitte hat.

Die Ausgestaltung mit den gewölbtem Abstützabschnitt bringt im Vergleich zu einem massiven Dämpferelement eine insgesamt weichere Dämpfungscharakteristik und erlaubt größere Auslenkungen in Axialrichtung des Befestigungszapfens.

Der Kopfabschnitt kann gegenüber dem Mittelabschnitt verbreitert sein. Der Kopfabschnitt kann beispielsweise in Form einer Platte ausgestaltet sein, deren Ausdehnung senkrecht zur Axialrichtung des Befestigungszapfens verläuft. Dadurch wird eine dauerhaft gut in Axialrichtung belastbare Formschlussverbindung möglich.

Gemäß einer Weiterbildung sind die Dämpferelemente als Formkörper aus einem Elastomer gefertigt. Ein Elastomer ist ein formfester, aber elastisch verformbarer Kunststoff, der sich bei Zugbelastung und Druckbelastung elastisch verformen kann, jedoch danach seine ursprüngliche unverformte Gestalt zurückbekommt. Vorzugsweise bestehen die Dämpferelemente im Wesentlichen aus einem Fluorkautschuk-Elastomer. Dadurch ergeben sich eine hohe Beständigkeit gegen Chemikalien und verbesserte Eigenschaften bei höheren Temperaturen und ggf. bei Tieftemperaturanwendungen.

Es kann sein, dass die Dämpferelementanordnung lediglich das erste und das zweite Dämpferelement aufweist. Bei manchen Ausführungsformen ist zusätzlich zu dem ersten und dem zweiten Dämpferelement ein zwischen den Dämpferelementen angeordnetes Zwischenelement vorgesehen, so dass die Dämpferelemente nicht in direktem Kontakt zueinander stehen. Vorzugsweise ist auch das Zwischenelement als ein Formkörper aus einem Elastomer gefertigt, insbesondere einem Fluorkautschuk-Elastomer.

Die Verwendung von Elastomeren in der Dämpferelementanordnung bietet zum einen dämpfungstechnische Vorteile, da innerhalb der Elastomere größere Anteile der kinetischen Energie aus Schwingungen in Wärmeenergie umgewandelt werden können. Außerdem kann eine sehr zuverlässige Befestigung zwischen den Dämpferelementen bzw. der Dämpferelementanordnung und dem Befestigungszapfen geschaffen werden. Gemäß einer Weiterbildung ist der Kopfabschnitt des Befestigungszapfens durch Vulkanisation mit einem Elastomer-Element der Dämpferelementanordnung verbunden. Bei der Vulkanisation wird ein thermoplastischer Ausgangskautschuk durch die Vulkanisation in einen elastomeren Kunststoff überführt. Findet diese Vulkanisation statt, während der Kopfabschnitt schon in ein Elastomerteil eingebettet ist, entsteht eine besonders dauerfeste und belastbare Verbindung.

Der Schwingungsdämpfer ist für eine Haupt-Belastungsrichtung ausgelegt, die parallel zur Axialrichtung des Befestigungszapfens verläuft. Es können jedoch auch Belastungen quer zur Axialrichtung auftreten, also in Lateralrichtung. Unter anderem im Hinblick auf diese Belastungsfälle ist gemäß einer Weiterbildung vorgesehen, dass an wenigstens einem Element der Dämpferelementanordnung eine umlaufende Führungsstruktur aus elastisch nachgiebigem Material ausgebildet ist, die sich an der Innenseite der Topfwand abstützt. Dadurch kann einem seitliches Einknicken der Dämpferelementanordnung bei Querbelastungen entgegengewirkt werden. Auch laterale Schock- oder Schwingungskomponenten können gedämpft werden. Die Führungsstruktur kann z.B. nach Art einer umlaufenden gewölbten Dichtlippe oder eines umlaufenden Kragens gestaltet sein. Die Führungsstruktur kann ebenfalls aus Elastomermaterial bestehen und ist vorzugsweise einstückig mit einem Element der Dämpferelementanordnung ausgebildet. In der Regel reicht eine einzige solche umlaufende Führungsstruktur aus. Daher ist bei manchen Ausführungsformen nur eine umlaufende Führungsstruktur vorgesehen, bei anderen sind jedoch wenigstens zwei solcher Führungsstrukturen vorhanden, was gegebenenfalls die Stabilität gegen Querbeanspruchung verbessern kann.

Es gibt unterschiedliche Möglichkeiten, die Dämpferelemente und die Verbindung zum Kopfabschnitt des Befestigungszapfens zu realisieren. Bei manchen Ausführungsformen sind das erste Dämpferelement und das zweite Dämpferelement getrennt gefertigte Dämpferelemente, die beim Zusammenbau auch einzeln eingebaut werden können. Es gibt Varianten, bei denen eines der Dämpferelemente im Wesentlichen nur den gewölbten Abstützabschnitt aufweist, also beispielsweise eine annähernde Kalottenform hat, während das andere Dämpferelement zusätzlich zum Abstützabschnitt noch einen einstückig damit ausgebildeten Aufnahmeabschnitt für den einvulkanisierten Kopfabschnitt des Befestigungsbolzens hat. Dieser kann im topfbodenseitigen Dämpferelement oder im gegenüberliegenden Dämpferelement näher bei der Basisplatte befestigt sein.

Bei manchen Ausführungsformen ist vorgesehen, dass das erste Dämpferelement und das zweite Dämpferelement ein einstückiges Dämpferelement bilden, wobei der Kopfabschnitt in einem Mittelbereich zwischen den Abstützabschnitten der Dämpferelemente angeordnet ist. In diesem Bereich kann auch einstückig damit eine umlaufende Führungsstruktur nach Art einer U-förmigen Dichtlippe ausgebildet sein.

Es kann auch sein, dass sowohl das erste Dämpferelement als auch das zweite Dämpferelement jeweils im Wesentlichen nur aus dem gewölbten Abstützabschnitt bestehen, also beispielsweise nach Art einer Halbkugel ausgebildet sein können. Insbesondere in diesem Fall kann ein zwischen den Dämpferelementen angeordnetes Zwischenelement vorgesehen sein, in welchem der Kopfabschnitt befestigt ist.

Gemäß einer Weiterbildung ist vorgesehen, dass zwischen dem Rand des gewölbten Abstützabschnitts des ersten Dämpferelements und der Basisplatte und/oder zwischen dem Rand des gewölbten Abstützabschnitts des zweiten Dämpferelements und dem Bodenabschnitt ein Stützring aus einem im Wesentlichen inelastischen Material angeordnet ist. In diesem Fall würde sich der Abstützabschnitt nicht unmittelbar bzw. direkt an der Basisplatte oder dem Topfabschnitt abstützen, sondern indirekt unter Zwischenlage eines Teils des Stützrings. Der Stützring kann den Zusammenbau der Anordnung unterstützen, indem der umlaufende Rand des elastisch nachgiebigen Abstützabschnitts durch den aufgesetzten Stützring stabilisiert wird.

Ein weiterer Beitrag für gute Langlebigkeit des Schwingungsdämpfers sowie für dauerhaft zuverlässige Funktion wird gemäß einer Weiterbildung dadurch erreicht, dass in dem Topfboden und/oder in der Topfwand des Topfelements wenigstens ein vom Innenraum nach außen durchgehendes Durchgangsloch ausgebildet ist, beispielsweise eine Bohrung, die nachträglich in das zunächst tiefgezogene Topfelement eingebracht wird. Im Topfboden kann eine zentrale Durchgangsbohrung vorliegen, an der Topfwand kann in geeigneter Höhe eine einzige Lüftungsbohrung vorgesehen sein oder aber es können mehrere Belüftungsbohrungen axial versetzt vorgesehen sein, um alle zwischen Elastomermaterial und Gehäuse eingeschlossenen Hohlräume gleichermaßen unmittelbar belüften zu können. Durch Belüftungsbohrungen können beispielsweise in sehr warmen Umgebungen ein übermäßiges Aufheizen des Innenraums des Schwingungsdämpfers und damit eventuell einhergehende Funktionseinschränkungen vermieden oder vermindert werden.

### KURZBESCHREIBUNG DER ZEICHNUNGEN

Weitere Vorteile und Aspekte der Erfindung ergeben sich außer aus den Ansprüchen auch aus der nachfolgenden Beschreibung von Ausführungsbeispielen der Erfindung, die anhand der Figuren erläutert sind.
- Fig. 1: zeigt eine Seitenansicht einer Ausführungsform eines Schwingungsdämpfers im montierten Zustand;
- Fig. 2: zeigt eine schrägperspektivische Ansicht eines Schwingungsdämpfers gemäß einem Ausführungsbeispiel;
- Fig. 3: zeigt einen Längsschnitt durch eine Ausführungsform des Schwingungsdämpfers;
- Fig. 4: zeigt einen Längsschnitt durch eine andere Ausführungsform eines Schwingungsdämpfers;
- Fig. 5: zeigt einen Längsschnitt durch eine weitere andere Ausführungsform eines Schwingungsdämpfers;
- Fig. 6: zeigt einen Längsschnitt durch eine nochmals andere Ausführungsform eines Schwingungsdämpfers.

### DETAILLIERTE BESCHREIBUNG DER AUSFÜHRUNGSBEISPIELE

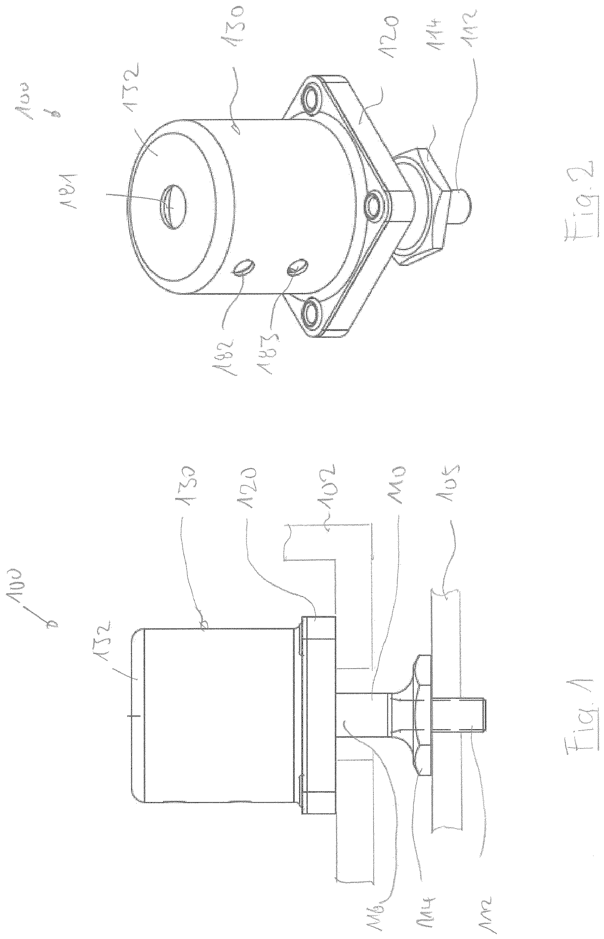

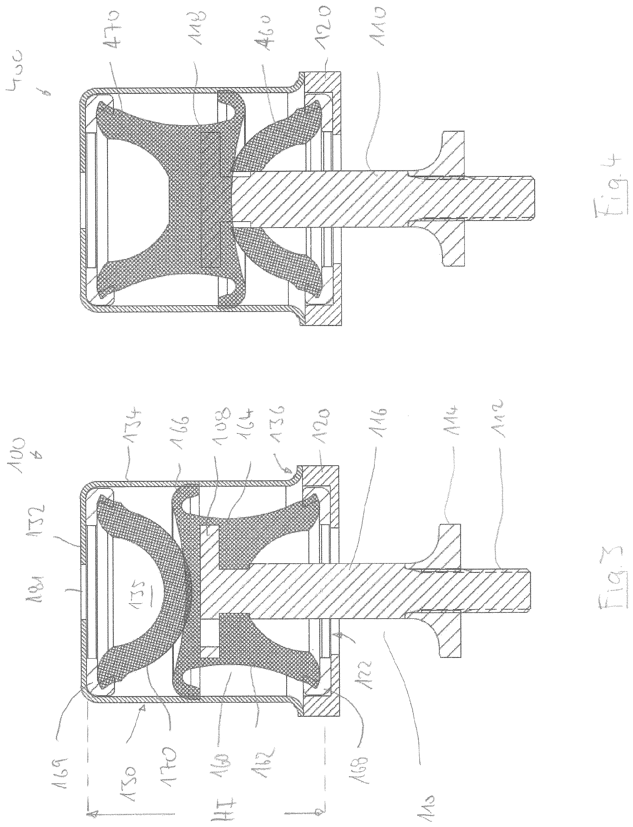

Die Fig. 1 zeigt eine Seitenansicht einer Ausführungsform eines erfindungsgemäßen Schwingungsdämpfers 100 im eingebauten Zustand. Zum besseren Verständnis von Aufbau und Funktion sei außerdem auf die schrägperspektivische Ansicht der Ausführungsform in Fig. 2 sowie auf den Längsschnitt dieser Ausführungsform in Fig. 3 verwiesen.

Der Schwingungsdämpfer 100 ist dazu ausgebildet, einen Gegenstand 102, beispielsweise ein erschütterungsempfindliches elektronisches Gerät, an einem Träger 105 zu befestigen. Der in Fig. 1 sichtbare Teil des Gegenstands 102 kann beispielsweise ein metallischer Rahmen sein. Bei dem Träger 105 kann es sich zum Beispiel um eine Tischplatte oder um einen anderen Rahmen handeln, der fest in ein Fahrzeug eingebaut ist. Die Aufgabe des Schwingungsdämpfers besteht darin, die Übertragung von Schwingungen vonseiten des Trägers 105 zu dem Gegenstand 102 bzw. zu dem Gerät zu dämpfen, um die empfindlichen Teile des schwingungsgedämpft montierten Gegenstands zu schützen.

Der Schwingungsdämpfer 100 umfasst einen Befestigungszapfen 110 aus Stahl, der an seinem in Fig. 1 sichtbaren unteren Ende eine Befestigungseinrichtung zur Befestigung des Befestigungszapfens an dem Träger 102 aufweist. Die Befestigungseinrichtung umfasst am Ende des Befestigungszapfens einen gerollten Gewindeabschnitt 112, auf den eine Sechskant-Kontermutter 114 aufgeschraubt ist. Mit dem Gewindeabschnitt 112 kann der Befestigungszapfen in eine mit Innengewinde versehene Befestigungsbohrung im Träger eingeschraubt werden. Durch Festziehen der Kontermutter 114 bleibt die Verbindung auch bei Vibrationen dauerhaft stabil. Anschließend an den Gewindeabschnitt ist ein Mittelabschnitt 116 vorgesehen, der eine zylindrische Außenkontur hat, aber auch anders gestaltete Außenkonturen haben kann. Am oberen Ende des Befestigungszapfens ist ein gegenüber dem Mittelabschnitt 116 verbreiterter Kopfabschnitt 118 in Form einer Platte ausgebildet, die senkrecht zur Axialrichtung des Befestigungszapfens ausgerichtet ist. Wie später erläutert wird, dient der Kopfabschnitt einer dauerhaften sicheren Befestigung zwischen dem Befestigungszapfen und Dämpferelementen einer Dämpferelementanordnung.

Der Schwingungsdämpfer hat ein relativ zum Befestigungszapfen 110 bewegliches Gehäuse, welches aus mehreren Teilen zusammengesetzt ist. Eine im Wesentlichen quadratisch gestaltete Basisplatte 120 hat eine zentrale Durchgangsöffnung 122 zum Hindurchführen des Befestigungszapfens. Die lichte Weite der Durchgangsöffnung ist wesentlich größer als die Außenabmessungen des Befestigungszapfens 110, so dass sich dieser innerhalb der Durchgangsöffnung axial und seitlich bewegen kann, ohne mit der Basisplatte 120 zu kollidieren. An der Basisplatte sind auch Einrichtungen zur Befestigung der Basisplatte an dem Gegenstand 102 vorgesehen. In diesem Fall sind in den vier Eckbereichen der Basisplatte jeweils von oben nach unten durchgehende Befestigungsbohrungen vorgesehen, durch die Befestigungsschrauben hindurchgeführt werden können, die mit dem Gegenstand 102 dann verschraubt werden (siehe Fig. 1 und 2).

Weiterhin ist ein Topfelement 130 vorgesehen, bei dem es sich um ein einstückiges Tiefziehteil aus einem Stahlwerkstoff handelt. Das in den Darstellungen auf dem Kopf stehende Topfelement hat einen (in den Darstellungen nach oben weisenden) im Wesentlichen ebenen Topfboden 132, an den sich eine im Wesentlichen zylindrische Topfwand 134 anschließt, deren nach unten weisender Rand 136 nach außen erweitert ist und sich auf der Oberseite der Basisplatte 120 abstützt. Der Topfabschnitt wird über Einklemmen des Rands mittels der Befestigungsschrauben am Basiselement befestigt (siehe Fig. 2).

Zwischen dem Topfboden 132 und dem Basiselement 120 wird im montierten Zustand ein von der Topfwand 134 seitlich umschlossener Innenraum 135 gebildet. Dessen Höhe HI, gemessen zwischen Oberseite der Basisplatte 120 und der Innenseite des Topfbodens, ist etwas größer als der Durchmesser des Topfelements.

In dem vom Topfelement 130 und der Basisplatte 120 definierten Innenraum ist eine Dämpferelementanordnung 150 angeordnet, die im Beispiel von Fig. 3 genau zwei voneinander gesondert gefertigte Dämpferelemente aus einem Elastomermaterial umfasst. Ein elastisch nachgiebiges erstes Dämpferelement 160 hat einen im Wesentlichen kalottenförmigen bzw. halbkreisförmig gewölbten Abstützabschnitt 162, dessen konkave Seite zur Basisplatte 120 hin offen ist und der sich mit einem umlaufenden Rand unter Zwischenlage eines ersten Stützrings 168 aus Polyimid an der Basisplatte 120 abstützt. Einstückig mit dem gewölbten Abstützabschnitt 162 ist ein rotationssymmetrischer Befestigungsabschnitt ausgebildet, an dessen oberem Ende eine ringförmig herumlaufende Führungsstruktur 166 in Form einer im Querschnitt U-förmig gewölbten Dichtlippe ausgebildet ist, die sich über den gesamten Umfang an der Innenseite der Topfwand abstützt.

Das erste Dämpfungselement ist im Bereich des massiven Befestigungsabschnitts 164 auf den plattenförmigen Kopfabschnitt 118 des Befestigungszapfens aufvulkanisiert. Dadurch entsteht eine auch bei Wechselbeanspruchung dauerhaft feste Verbindung, die aufgrund des verbreiterten Kopfabschnitts in Axialrichtung des Bolzens auch formschlüssig wirkt, so dass auch bei größeren Kräften ein Herauslösen des Befestigungszapfens aus dem Dämpfungselement verhindert ist.

Zwischen dem ersten Dämpferelement 160 und dem Topfboden 132 ist das zweite Dämpferelement 170 angeordnet, welches im Wesentlichen die Form einer zum Topfboden hin offenen Kalotte mit dicker Wandstärke aufweist. Die Wandstärke beträgt mehr als 10% des Außendurchmessers der Kalotte, insbesondere zwischen 10% und 20% dieses Durchmessers. Das zweite Dämpfungselement besteht also im Wesentlichen aus einem gewölbten Abstützabschnitt, dessen umlaufender Rand sich vermittelt über einen zweiten Stützring 169 am Topfboden 132 bzw. am Übergangsbereich zwischen Topfboden und Topfwand abstützt.

In der Mitte des Topfbodens, also im eingebauten Zustand oben, ist eine Belüftungsbohrung 181 eingebracht, die den vom oberen Dämpferelement eingeschlossenen Raum mit der Umgebung verbindet. Dadurch kann Überhitzung in diesem Bereich vermieden werden, außerdem werden Eintauchbewegungen nicht durch Gasdruck gehemmt.

Zwei weitere Belüftungsbohrungen 182, 183 sind axial versetzt in der Topfwand 134 so eingebracht, dass einerseits der Zwischenraum zwischen oberem und unterem Dämpferelement und andererseits der Bereich um das untere Dämpferelement belüftet werden kann. Damit ist auch in warmen Umgebungen ein Mittel gegen Überhitzung geschaffen, die die Funktion beeinträchtigen könnte.

Wird nun die Verbindung zwischen Träger 105 und getragenem Gegenstand 102 im Bereich des Schwingungsdämpfers 100 von unten mit einem Stoß erschüttert, so taucht der Befestigungszapfen 110 in den Innenraum 135 mit den Dämpferelementen hinein, das basisseitige erste Dämpferelement wird unter Zug belastet oder entlastet und das topfbodenseitige zweite Dämpferelement wird unter Druck belastet. Innerhalb der Elastomerkörper wird dadurch Wärmeenergie erzeugt, die der Schwingung entzogen wird. Wird in einer anderen Situation die Verbindung im Bereich des Schwingungsdämpfers zunächst auf Zug belastet, so wird das erste Dämpferelement in Richtung Bodenplatte zusammengedrückt, während das obere zweite Dämpferelement sich entspannen kann. Da sich der Kopfabschnitt 118 etwa in der Mitte zwischen Basisplatte 120 und Topfboden 134 befindet, sind in beide Richtungen große initiale Auslenkungswege möglich, so dass eine Dämpfungswirkung unabhängig von der anfänglichen Belastung des Schwingungsdämpfers hochwirksam ist.

Bei der nun folgenden Beschreibung der anderen Ausführungsbeispiele werden Elemente, die in gleicher oder ähnlicher Form auch bei der Ausführungsform der Fig. 1 bis 3 vorhanden sind, mit denselben Bezugszeichen bezeichnet. Wesentliche Unterschiede gibt es nur beim Aufbau der Dämpferelementanordnung innerhalb des Gehäuses und bei der Art der Verbindung zwischen Dämpferelementanordnung und Befestigungszapfen.

Das Ausführungsbeispiel des Schwingungsdämpfers 400 von Fig. 4 unterscheidet sich von demjenigen der Fig. 3 u.a. dadurch, dass die beiden Dämpferelemente unterschiedlicher Gestalt ihre Plätze getauscht haben. Bei dieser Ausführungsform ist nun das erste Dämpferelement 460, welches sich an der Basisplatte 120 abstützt, im Wesentlichen kalottenförmig (entsprechend dem zweiten Dämpferelement der anderen Ausführungsform), während das zweite Dämpferelement 470, welches sich mit seinem gewölbten Abstützabschnitt am Topfboden 132 abstützt, in seiner Form dem ersten Dämpferelement der anderen Ausführungsform entspricht. Wie beim ersten Ausführungsbeispiel ist der plattenförmige Kopfabschnitt 118 des Befestigungszapfens 110 in den massiven Befestigungsabschnitt des zweiten Dämpferelements einvulkanisiert. Das kalottenförmige erste Dämpferelement 160 hat eine mittige Durchlassbohrung, durch die der Mittelabschnitt des Befestigungszapfens hindurchgeführt ist.

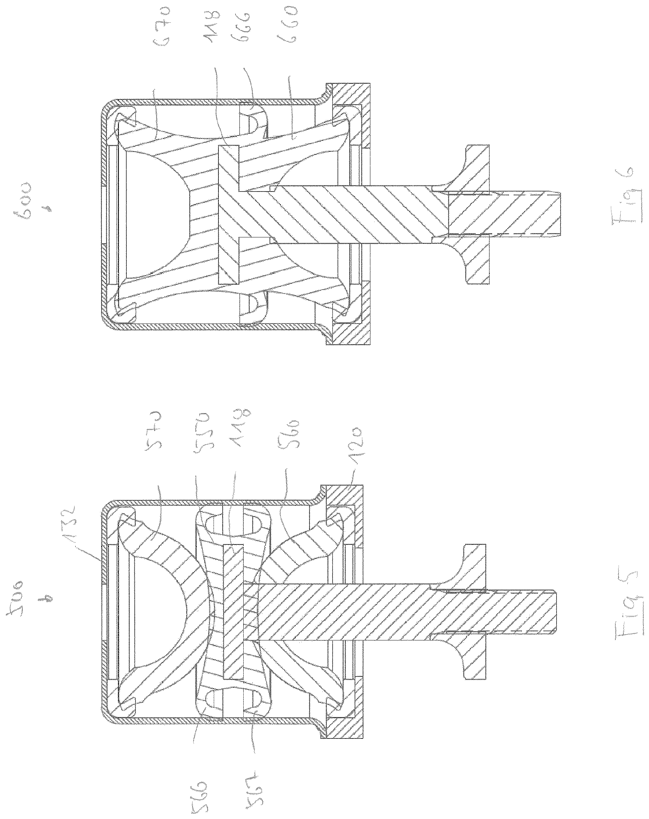

Eine Besonderheit des Schwingungsdämpfers 500 gemäß Fig. 5 besteht darin, dass die Dämpferelementanordnung hier insgesamt drei voneinander gesonderte Elemente aus Elastomermaterial aufweist. Das erste Dämpferelement 560 in Form einer nach unten offenen Kalotte stützt sich an der Basisplatte 120 ab. Das zweite Dämpferelement 570 hat ebenfalls im Wesentlichen Kalottenform und stützt sich mit seiner offenen Seite am Topfboden 132 ab. Zwischen den beiden Dämpferelementen ist ein Zwischenelement 550 angeordnet, das genau wie die Dämpferelemente aus einem Elastomermaterial besteht. Das Zwischenelement 550 hat mehrere Funktionen. Zum einen ist der verbreiterte Kopfabschnitt 118 des Befestigungszapfens nun weder im ersten noch im zweiten Dämpferelement einvulkanisiert, sondern im Zwischenelement 550. Dieses weist außerdem an seinem Umfang zwei gegensinnig gekrümmte elastisch nachgiebige umlaufende Führungsstrukturen 566, 567 auf, die verhindern, dass der Befestigungszapfen 110 bei einer Querbelastung stark in Querrichtung ausweichen kann.

Bei der Ausführungsform des Schwingungsdämpfers 600 in Fig. 6 besteht die Besonderheit darin, dass die Dämpferelementanordnung nur ein einziges Formelement aus Elastomermaterial hat, in welches das erste Dämpferelement 660 und das zweite Dämpferelement 570 als funktionale Bestandteile integriert sind. Auch die umlaufende Führungsstruktur 666 etwa auf Höhe des Kopfabschnitts 118 des Befestigungszapfens ist einstückig mit den anderen funktionalen Komponenten ausgebildet. Auch hier wird der wesentliche Teil der Dämpfungswirkung durch die jeweils etwa kalottenförmigen Abstützabschnitte realisiert, die sich einerseits zum Topfboden und andererseits zur Basisplatte öffnen.

Funktionswichtige Merkmale der Schwingungsdämpfer können wie folgt zusammengefasst werden. Ein wichtiger Aspekt liegt darin, dass der in ein Dämpfungselement einvulkanisierte Kopfabschnitt etwa im Mittelbereich des Topfs angeordnet ist, so dass in beide Richtungen optimale Schwingwege und damit eine deutlich verbesserte Dämpfung gegenüber anderen Anordnungen erreicht werden kann. Eine bidirektional wirksame Dämpfung mit hohen Schwingungsamplituden in beide axialen Richtungen kann zudem auch dadurch erreicht werden, dass die Abmessungen des Innenraums so optimiert werden, dass die für die Schwingungsbewegung zur Verfügung stehende Höhe des Innenraums größer ist als der Durchmesser. Auch laterale Komponenten von Schwingungen und Stößen werden wirksam gedämpft. Weitere Funktionsverbesserungen ergeben sich durch das Einbringen von Belüftungsbohrungen, um einen optimalen Wärmetransport zu gewährleisten und somit das Aufheizen des Schwingungsdämpfers unter extremen Bedingungen zu verhindern. Ansonsten sind die Komponenten strukturell so ausgelegt, dass sie auch hohen Belastungen dauerhaft standhalten können. Neben der Verwendung eines gerollten Gewindes zur Befestigung des Befestigungszapfens an einem Träger ist hier auch die Einvulkanisierung des vergrößerten Kopfabschnitts in ein Elastomerelement der Dämpferelementanordnung zu nennen, wodurch dauerhaft stabile Verbindungen auch unter großer Schwingungsbeanspruchung erzielt werden können.

## Patentansprüche

1. Schwingungsdämpfer (100) zur schwingungsdämpfenden Befestigung eines Gegenstands (102), insbesondere eines erschütterungsempfindlichen elektronischen Geräts, an einem Träger (105) umfassend:
einen Befestigungszapfen (110), der an einem Ende eine Befestigungseinrichtung zur Befestigung des Befestigungszapfens (110) an dem Träger (105), daran anschließend einen Mittelabschnitt (116) und an einem gegenüberliegenden Ende einen Kopfabschnitt (118) aufweist;
eine Basisplatte (120) mit einer Durchgangsöffnung (122) zum Hindurchführen des Befestigungszapfens und Einrichtungen zur Befestigung der Basisplatte an dem Gegenstand;
ein Topfelement (130) mit einem Topfboden (132) und einer zylindrischen Topfwand (134), die entfernt von dem Topfboden einen Rand (136) aufweist, wobei das Topfelement (130) mit dem Rand an der Basisplatte (120) befestigt ist, so dass zwischen dem Basiselement (120) und dem Topfboden (132) ein im Wesentlichen zylindrischer Innenraum (135) gebildet ist;
eine Dämpferelementanordnung (150), die in dem Innenraum angeordnet ist umfassend:
ein elastisch nachgiebiges erstes Dämpferelement (160), das sich direkt oder indirekt an der Basisplatte (120) abstützt;
ein elastisch nachgiebiges zweites Dämpferelement (170), das sich direkt oder indirekt an dem Topfboden (132) abstützt;
wobei der Kopfabschnitt (118) des Befestigungszapfens (110) im lastfreien Zustand des Schwingungsdämpfers (100) in einem axialen Mittelbereich des Innenraums zwischen der Basisplatte (120) und dem Topfboden (132) angeordnet und mit wenigstens einem der Dämpferelemente (160, 170) oder einem zwischen den Dämpferelementen angeordneten Zwischenelement (550) in Axialrichtung des Befestigungszapfens formschlüssig verbunden ist.

2. Schwingungsdämpfer nach Anspruch 1, **dadurch gekennzeichnet, dass** der Kopfabschnitt (118) innerhalb eines mittleren Drittels des Innenraums (135) zwischen dem Topfboden (132) und der Basisplatte (120) angeordnet ist, wenn der Schwingungsdämpfer lastfrei ist.

3. Schwingungsdämpfer nach einem Ansprüche 1 oder 2, **dadurch gekennzeichnet, dass** der Kopfabschnitt (118) gegenüber dem Mittelabschnitt (116) verbreitert ist, wobei vorzugsweise der Kopfabschnitt (118) in Form einer Platte ausgestaltet ist, deren Ausdehnung senkrecht zu einer Axialrichtung des Befestigungszapfens (110) verläuft.

4. Schwingungsdämpfer nach einem der vorhergehenden Ansprüche, **dadurch gekennzeichnet, dass** der Kopfabschnitt (118) des Befestigungszapfens (110) durch Vulkanisation mit einem Element der Dämpferelementanordnung (150) verbunden ist.

5. Schwingungsdämpfer nach einem der vorhergehenden Ansprüche, **dadurch gekennzeichnet, dass** das erste Dämpferelement (160) einen zum Basiselement (120) offenen, gewölbtem Abstützabschnitt aufweist, der sich mit einem umlaufenden Rand direkt oder indirekt an der Basisplatte (120) abstützt und/oder dass das zweite Dämpferelement (170) einen zum Topfboden (132) offenen, gewölbtem Abstützabschnitt aufweist, der sich mit einem umlaufenden Rand direkt oder indirekt an dem Topfboden (132) abstützt, wobei vorzugsweise die gewölbten Abstützabschnitte der Dämpferelemente rotationssymmetrisch ausgebildet sind, insbesondere in Form von Halbkugeln.

6. Schwingungsdämpfer nach einem der vorhergehenden Ansprüche, **dadurch gekennzeichnet, dass** wenigstens eines der Dämpferelemente (170) im Wesentlichen die Form einer Halbkugel aufweist.

7. Schwingungsdämpfer nach Anspruch 5 oder 6, **dadurch gekennzeichnet, dass** zwischen dem Rand des gewölbten Abstützabschnitts des ersten Dämpferelements (160) und der Basisplatte (120) und/oder zwischen dem Rand des gewölbten Abstützabschnitts des zweiten Dämpferelements (170) und dem Topfboden (132) ein Stützring (168, 169) aus einem im Wesentlichen inelastischen Material angeordnet ist.

8. Schwingungsdämpfer nach einem der vorhergehenden Ansprüche, **dadurch gekennzeichnet, dass** die Dämpferelemente (160, 170) als Formkörper aus einem Elastomer gefertigt sind, insbesondere einem Fluorkautschuk-Elastomer.

9. Schwingungsdämpfer nach einem der vorhergehenden Ansprüche, **dadurch gekennzeichnet, dass** die Dämpferelementanordnung zusätzlich zu dem ersten Dämpferelement (560) und dem zweiten Dämpferelement (570) ein zwischen den Dämpferelementen angeordnetes Zwischenelement (550) umfasst, das als ein Formkörper aus einem Elastomer gefertigt ist, insbesondere einem Fluorkautschuk-Elastomer.

10. Schwingungsdämpfer nach einem der vorhergehenden Ansprüche, **dadurch gekennzeichnet, dass** an wenigstens einem Element der Dämpferelementanordnung (150) eine umlaufende Führungsstruktur (166) aus elastisch nachgiebigem Material ausgebildet ist, die sich an der Innenseite der Topfwand (134) abstützt, wobei die Führungsstruktur vorzugsweise nach Art einer gewölbten Dichtlippe gestaltet ist.

11. Schwingungsdämpfer nach einem der vorhergehenden Ansprüche, **dadurch gekennzeichnet, dass** das erste Dämpferelement (660) und das zweite Dämpferelement (670) ein einstückiges Dämpferelement bilden, wobei der Kopfabschnitt (118) in einen Mittelbereich zwischen Abstützabschnitten der Dämpferelemente angeordnet ist.

12. Schwingungsdämpfer nach einem der vorhergehenden Ansprüche, **dadurch gekennzeichnet, dass** in dem Topfboden (132) und/oder in der Topfwand (134) des Topfelements (130) wenigstens ein von Innenraum nach außen durchgehendes Durchgangsloch (181, 182, 183) ausgebildet ist.
